Europäisches Patentamt

(19) European Patent Office

Office européen des brevets

(11) Publication number: **0 131 610**
**B1**

(12) **EUROPEAN PATENT SPECIFICATION**

(45) Date of publication of patent specification: **27.04.88**

(21) Application number: **84900521.0**

(22) Date of filing: **16.01.84**

(86) International application number:
**PCT/GB84/00009**

(87) International publication number:
**WO 84/02927 02.08.84 Gazette 84/18**

(51) Int. Cl.⁴: **C 22 C 1/09, B 22 D 19/14**

(54) THE REINFORCEMENT OF ARTICLES OF CAST METAL OR METAL ALLOY.

(30) Priority: **18.01.83 GB 8301320**

(43) Date of publication of application:
**23.01.85 Bulletin 85/04**

(45) Publication of the grant of the patent:
**27.04.88 Bulletin 88/17**

(84) Designated Contracting States:
**FR**

(56) References cited:
**EP-A-0 108 216**
**DE-A-2 644 272**
**FR-A-1 535 660**
**GB-A-1 489 346**
**GB-A-1 567 328**
**US-A-3 869 339**
**US-A-4 312 398**

(73) Proprietor: **AE PLC**
**Cawston House Cawston**
**Rugby Warwickshire CV22 7SB (GB)**

(72) Inventor: **TOMMIS, Norman**
**11 Manscombe Road**
**Bradford BD15 7AW (GB)**
Inventor: **COOPER, James, Arthur**
**53 Coventry Road Lutterworth**
**Leicestershire LE17 4QF (GB)**

(74) Representative: **Foster, David Martyn et al**
**Mathisen, Macara & Co. The Coach House 6-8**
**Swakeleys Road**
**Ickenham Uxbridge UB10 8BZ (GB)**

Courier Press, Leamington Spa, England.

## Description

The invention relates to the reinforcement of articles of cast metal or metal alloy.

Many articles are formed from cast metal or metal alloys, such as aluminium or aluminium alloys, which are light in weight and inexpensive to produce. Such metals or metal alloys have, however, certain disadvantageous physical properties such as an inability to resist elevated temperatures and/or comparatively low resistance to wear.

For this reason, it has been proposed to reinforce such articles with a material which has improved characteristics in relation to the metal or metal alloy. For example, it has been proposed to provide reinforcements of ferrous or ceramic materials in articles of cast aluminium or aluminium alloy to provide the articles with increased resistance to elevated temperatures and/or increased resistance to wear. These reinforcements are generally themselves solid castings or mouldings and have the disadvantage that they can be difficult to incorporate into the article of cast metal alloy and that they increase substantially the weight of the article of cast metal or cast metal alloy.

In order to overcome this difficulty, it has more recently been proposed to reinforce articles of cast metal or metal alloy by incorporating in them fibres or whiskers of a reinforcing material. An example of this is shown in EP—A—108216. Although such fibres or whiskers are inherently very strong, their incorporation into articles of cast metal or metal alloy has proved difficult because of the problem of holding the fibres or whiskers relative to one another in a required shape before their incorporation into the article of cast metal or metal alloy.

US—A—386339 endeavours to overcome this problem by abandoning the use of fibres or whiskers and substituting continuous filaments which are bound together. The filaments are cut and are sufficiently flexible to be wrapped and moulded.

According to the invention, there is provided a method of manufacturing a reinforcement of separate whiskers or fibres for incorporation in a cast article of metal or metal alloy during casting thereof by a process in which molten metal or metal alloy penetrates the reinforcement of the kind comprising binding together a mass of fibres or whiskers of a reinforcing material together before casting with a binder which holds the fibres or whiskers together characterised in that the binder is a carbohydrate or a protein or a gum or latex which holds the fibres or whiskers together, the bound mass of fibres or whiskers then being shaped to form a reinforcement of a required shape for incorporation in said cast article.

The following is a more detailed description of some embodiments of the invention, by way of example, reference being made to the accompanying drawings in which:—

Figure 1 is a schematic side elevation of a reinforcement for an article of cast metal or metal alloy,

Figure 2 is a vertical cross-section through part of the first form of reinforced cast piston for an internal combustion engine,

Figures 3A, 3B, 3C, 3D and 3E show respective cross-sections of further shapes of reinforcement for incorporation in a piston for an internal combustion engine, and

Figure 4 is a vertical cross-section through part of a second form of reinforced cast piston for an internal combustion engine.

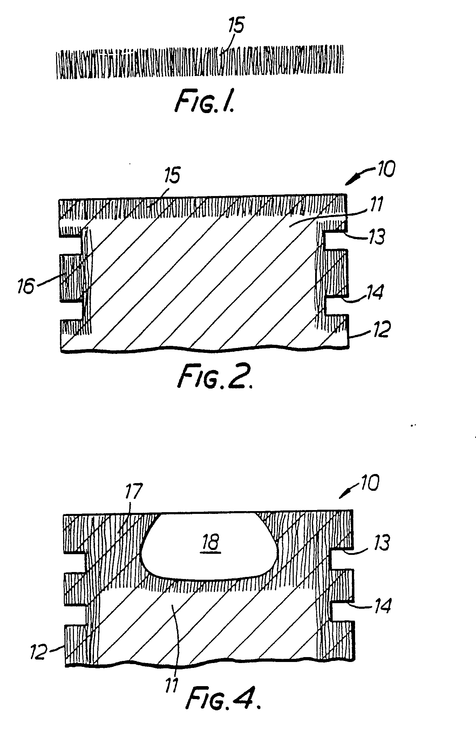

Referring first to Figures 1 and 2, the first form of piston 10 is cast in aluminium or aluminium alloy and has a crown 11 and a skirt 12 including piston ring grooves 13, 14. The crown 11 and the portion of the piston including the piston ring grooves 13, 14 are reinforced by respective reinforcements 15, 16 of fibres or whiskers to reinforce these portions against the effects of heat and/or wear.

The reinforcements 15, 16 are prepared and incorporated into the piston as follows.

First the fibres or whiskers are assembled. These may be alumina whiskers of the kind described in British Patent Specification No. 1 489 346 or may be alumina fibres having a diameter of between 1 and 5 micrometers and a length 100 to 1000 times their diameter. Such fibres are sold under the Trade Mark SAFFIL. Alternatively, the fibre or whiskers may be a mixture of alumina or silica fibres. The mixtures may be that sold under the trade mark KAOWOOL in which the proportions are 45% alumina fibres and 55% silica fibres, although other relative proportions may be used. For example, there may be between 40% and 80% of alumina fibres, with the remainder being silica fibres.

Next, the fibres or whiskers are bound together in one of the following ways.

Example 1

A quantity of such fibres or whiskers are stirred into a wetting agent containing carbohydrate. Examples of carbohydrates that may be suitable are as follows:—

1. Monosaccharides such as glucose, fructose or arabinose,

2. Sugar-like polysaccharides such as sucrose, mallose or lactose,

3. Polysaccharides not resembling sugars such as naturally occurring starches and their synthetic equivalents, soluble starches, cellulose and its derivatives, glycogen, inulin and gum tragacanth.

The wetting agent may be water based or may be a chloroethane or ketone wetting agent.

The fibre or whisker and liquid/carbohydrate mixture is then compressed or dried, but, before this is done, the fibres or whiskers may be orientated so that they are substantially parallel to one another. This may be done by passing the fibres or whiskers and liquid/carbohydrate mixture through an orifice or nozzle so forcing the fibres or whiskers to align with one another.

The mixture, whether orientated or not orientated, is then dried by use of a filter press where a quantity of the mixture is compacted and has the liquid extracted therefrom by suction at a pressure of 0.14—0.21 kg/cm². This compaction and withdrawal of the liquid leaves a mass of whiskers or fibres held together by the dried carbohydrate. The mass of fibres or whiskers will not be solid, since the carbohydrate will only interconnect the fibres or whiskers at points where the fibres or whiskers touch or cross one another or are very closely adjacent. In general, the mass of fibres or whiskers and carbohydrate will have a density of 15% to 25%, with the remainder being voids.

Example 2

The reinforcement is prepared as in Example 1 except that the carbohydrate is replaced by a protein such as gelatin or casin or albumin, although these two latter proteins may need to be thickened when in solution by use of a viscosity modifier such as glycerine.

Example 3

A quantity of fibres or whiskers ars held in suspension by means of an electrical charge adsorbed from a surfactant such as an anionic dispensing agent (e.g. sodium bistridecylsulphosuccinate) or a cationic dispensing agent (e.g. dioleate salt of dichrodamine IT). An additional binder is then added to the solution, this binder may be a gum which is either water soluble or solvent soluble. Examples of the former are gum acacia, gum tragacanth and agar while examples of the latter are rosin, copal and polyvinyl alcohol.

The suspending medium is then removed to leave sufficient binder adsorbed on the surface to cause fibres or whiskers to stick to each other. The removal of the suspending medium may be by use of a filter press, by drying (for water based media), by evaporation (for solvent based media), by chemical coagulation or by electrophoresis.

Example 4

A quantity of the fibres or whiskers are suspended in a natural or synthetic latex solution. Suitable solutions may include natural rubber latex or polystyrene, polyvinyl chloride and polyacrylate resins. The solution is then coagulated by evaporation or by chemical means, for example by changing the pH of the solution.

Example 5

The reinforcement is prepared as in Example 1 except that the carbohydrate/wetting agent system is replaced by a polymer/solvent system. For example, a polystyrene foam may be dissolved in xylene and mixed with the fibres or whiskers. The xylene is then recovered in a solvent reclaimation plant and recycled. Small amounts of gums or resins of the kind referred to in Example 3 may be added as additional binders.

The reinforcement so prepared, while not of exceptional strength, is sufficiently strong to allow it to be handled and to be lightly machined or cut. Thus, the mass can be shaped into any required shape such as a disc, as shown in Figure 1, for forming the crown reinforcement 15 or as an annulus (not shown) to form the piston ring groove reinforcement 16.

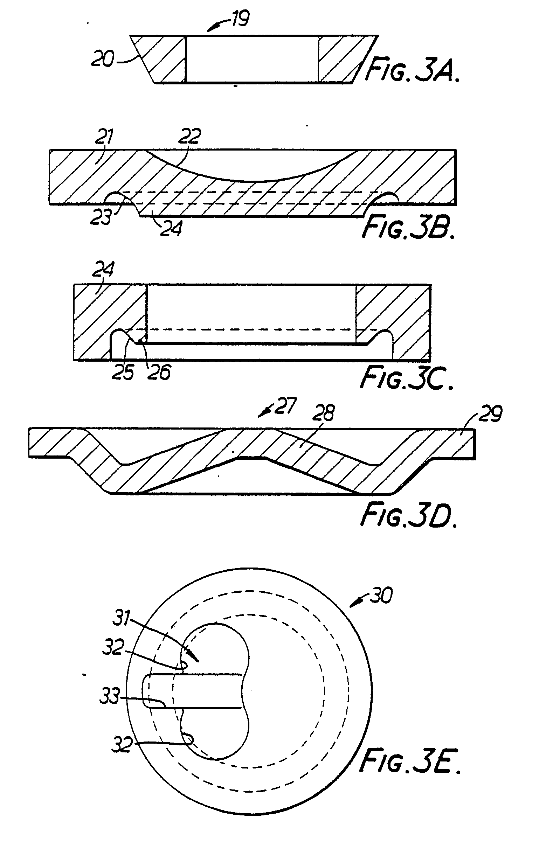

Other shapes which can be produced are shown in Figures 3A to 3E. The reinforcement of Figure 3A is an annular reinforcement 19 for the periphery of a crown with a tapered outer surface 20. The reinforcement of Figure 3B is a disc-like reinforcement 21 formed with a part-spherical depression 22 in the upper surface and an annular groove 23 in the lower surface. Inwardly of the groove 23, the reinforcement 21 is provided with an annular projection 24. This reinforcement 21 is for incorporation in a crown of a piston with the depression 22 defining a combustion bowl and the remainder providing a general reinforcement of the crown region.

The reinforcement of Figure 3C is an annular reinforcement 24 with a groove 25 around the under surface which forms an annular rib 26 adjacent the interior of the reinforcement. This reinforcement is for reinforcing the periphery of the crown of a piston. The reinforcement 27 of Figure 3D is in the form of a disc bent to provide a central frusto-conical projection 28 surrounded by an annular flange 29. The reinforcement 27 is incorporated into the crown of a piston with the surface of the projection defining a combustion bowl and the flange 29 reinforcing the edge of the crown.

The reinforcement 30 of Figure 3E is in the form of a disc provided on its upper surface with a depression 31 having two part-circular portions 32 separated by an elongate channel 32. The reinforcement 30 is incorporated in the crown of a piston with the depression 31 defining a combustion chamber for ensuring efficient combustion of the fuel/air mixture.

The reinforcements 15, 16 (or any of the reinforcements of Figures 3A to 3E) are then positioned in a mould of a squeeze casting apparatus. Molten aluminium or aluminium alloy is then fed into the mould and solidified under a force of, for example, 3 or more tonnes. This pressure forces the molten metal into the reinforcements 15, the molten metal or metal alloy passing through the voids between the individual fibres or whiskers.

The heat of the molten metal vapourises the binder and any gaseous products which are produced are pushed out by the pressure applied during squeeze casting. The strength of the binder and the presence of the voids ensures that the reinforcement undergoes no or substantially no deformation so that there is no change in shape or volume during the squeeze casting and so that the fibres do not change their orientation relatively to one another.

In this way, a piston is squeeze cast which has the crown 11 reinforced with the whiskers or fibres and, in the case of the embodiments of Figure 1, also has the ring band similarly reinforced. The piston ring grooves 12, 13 are then machined in the annular band and any necessary finish machining is performed at the same time. Thus, piston ring grooves are formed with increased wear resistance, due to the presence of the fibres or whiskers. In addition, the fibres or whiskers also form a band of low thermal conductivity in this region.

Referring next to Figure 4, it will be seen that a reinforcement for the piston ring grooves and the crown may be formed in one piece 17 and that a combustion bowl 18 may be machined in the reinforced portion of the crown.

The alumina fibres or whiskers of the reinforcements provide the pistons with a crown 11, and with piston ring grooves 13, 14, when these are also reinforced, which are better able to withstand the effects of heat and wear than the aluminium or aluminium alloy of the piston itself.

It will be appreciated that although the reinforcement of the crown and/or the ring band of a piston have been described above with reference to the drawings, similarly formed reinforcements may be used elsewhere in a piston. For example, a reinforcement may be provided at a lower end of a skirt of a piston to strengthen and/or stiffen this open end. Such a reinforcement may also provide a wear resistant band in this region. Further, a reinforcement may be provided within the body of the piston in order to control the expansion of the piston.

It will be appreciated that articles other than pistons may be so reinforced. For example, other parts of engines or motors may be so reinforced as required or non engine or motor parts such as casings or housings may be so reinforced.

The metal or metal alloy need not be aluminium or aluminium alloy, magnesium or magnesium alloys may be used or any other suitable metal or metal alloy.

The whiskers or fibres need not be chosen for enhanced wear or heat resistance capabilities, they may be chosen for other desirable characteristics such as heat conductivity or strength improvement.

## Claims

1. A method of manufacturing a reinforcement of whiskers or fibres for incorporation in a cast article of metal or metal alloy during casting thereof by a process in which molten metal or metal alloy penetrates the reinforcement of the kind comprising binding together a mass of separate fibres or whiskers of a reinforcing material together before casting with a binder which holds the fibres or whiskers together characterised in that the binder is a carbohydrate or a protein or a gum or latex which holds the fibres or whiskers together, the bound mass of fibres or whiskers then being shaped to form a reinforcement of a required shape for incorporation in said cast article.

2. A method according to claim 1, characterised in that the binder is a carbohydrate which is mixed with a wetting agent before being mixed with the fibres or whiskers.

3. A method according to claim 2, characterised in that after the fibres or whiskers have been mixed with the wetting agent/carbohydrate mixture, the fibres or whiskers are orientated.

4. A method according to any one of claims 1 to 3, characterised in that the reinforcement is such that the density of the fibres or whiskers in the reinforcement is 15% to 25%, the remainder being voids.

5. A method according to any one of claims 1 to 4 and characterised by the further step of placing the reinforcement to a casting mould and then casting a metal or metal alloy in the mould to form a piston for an internal combustion engine with the molten metal or metal alloy penetrating the reinforcement to disperse the binder.

6. A method according to claim 5, characterised in that the casting step is a squeeze casting step in which molten metal or metal alloy fed to the mould is solidified under pressure.

7. A method according to any one of claims 1 to 6, characterised in that the fibres or whiskers have a diameter of between 1 and 5 micrometres and a length 100 to 1000 times the diameter thereof.

## Patentansprüche

1. Verfahren zum Herstellen einer Verstärkung aus Whiskern oder Fasern zum Einschluß in einen gegossenen Artikel aus Metall oder Metallegierung während des Gießens desselben durch einen Vorgang, bei welchem das geschmolzene Metall oder die Metallegierung die Verstärkung durchdringt, wobei eine Vielzahl aus einzelnen Fasern oder Whiskern eines Verstärkungsmaterials vor dem Gießen mit einem Bindemittel zusammengebunden werden, das die Fasern oder Whisker zusammenhält, dadurch gekennzeichnet, daß das Bindemittel ein Kohlenwasserstoff oder ein Protein oder ein Gummi oder Latex ist, das die Fasern oder Whisker zusammenhält, und daß die gebundene Faser- oder Whiskermasse anschließend so geformt wird, daß sie eine Verstärkung einer erforderlichen Gestalt zum Einschluß in den gegossenen Artikel bildet.

2. Verfahren nach Anspruch 1, dadurch gekennzeichnet, daß das Bindemittel ein Kohlenwasserstoff ist, der mit einem Befeuchtungsmittel vermischt wird, bevor er mit den Fasern oder den Whiskern vermischt wird.

3. Verfahren nach Anspruch 2, dadurch gekennzeichnet, daß nach dem Vermischen der Fasern oder Whisker mit dem Befeuchtungsmittel/Kohlenwasserstoff-Gemisch die Fasern oder Whisker orientiert werden.

4. Verfahren nach einem der Ansrpüche 1 bis 3, dadurch gekennzeichnet, daß die Verstärkung derart ist, daß die Dichte der Fasern oder Whis-

7 · 0 131 610 · 8

ker in der Verstärkung zwischen 15% und 25% Leigt, wobei der Rest von Hohlräumen gebildet ist.

5. Verfahren nach einem der Ansprüche 1 bis 4 und gekennzeichnet durch den weiteren Schritt des Einbringens der Verstärkung in eine Gießform und anschließendes Gießen eines Metalls oder einer Metallegierung in die Form, um einen Kolben für eine Brennkraftmaschine zu bilden, wobei das geschmolzene Metall oder die Metallegierung die Verstärkung durchdringt, um das Bindemittel zu dispergieren.

6. Verfahren nach Anspruch 5, dadurch gekennzeichnet, daß der Gießschritt ein Druckgießschritt ist, in welchem die Metall- oder Metallegierungsschmelze, die in die Form gegeben worden ist, unter Druck verfestigt wird.

7. Verfahren nach einem der Ansprüche 1 bis 6, dadurch gekennzeichnet, daß die Fasern oder Whisker einen Durchmesser zwischen 1 und 5 µm und eine Länge aufweisen, die das 100- bis 1000-fache des Durchmessers beträgt.

**Revendications**

1. Procédé de fabrication d'un renforcement fait de trichites ou fibres, destiné à être incorporé dans un article moulé en métal ou alliage métallique pendant la coulée de cet article par une opération dans laquelle le métal ou alliage métallique fondu pénètre dans le renforcement, ce procédé étant du type qui consiste à lier les unes aux autres une masse de fibres ou trichites d'une matière de renforcement distinctes avant la coulée, à l'aide d'un liant qui maintient les fibres ou trichites liées, caractérisé en ce que le liant est hydrate de carbone, une protéine, une gomme ou un latex, qui maintient les fibres ou trichites liées, la masse liée de fibres ou trichites étant ensuite mise en forme pour former un renforcement possédant la configuration voulue pour être incorporé dans ledit article moulé.

2. Procédé selon la revendication 1, caractérisé en ce que le liant est un hydrate de carbone qui est mélangé à un agent mouillant avant d'être mélangé aux fibres ou trichites.

3. Procédé selon la revendication 2, caractérisé en ce que, après que les fibres ou trichites ont été mélangées avec le mélange agent mouillant/hydrate de carbone, les fibres ou trichites sont orientées.

4. Procédé selon l'une quelconque des revendications 1 à 3, caractérisé en ce que le renforcement est tel que la densité des fibres ou trichites dans le renforcement soit de 15 à 25%, le reste étant formé de vides.

5. Procédé selon l'une quelconque des revendications 1 à 4, caractérisé par la phase additionnelle consistant à placer le renforcement dans un moule de coulée, puis à couler un métal ou alliage métallique dans le moule pour former un piston pour moteur à combustion interne, le métal ou alliage métallique fondu pénétrant dans le renforcement pour disperser le liant.

6. Procédé selon la revendication 5, caractérisé en ce que la phase de coulée est une phase de coulée sous pression dans laquelle le métal ou alliage métallique fondu acheminé au moule se solidifie sous pression.

7. Procédé selon l'une quelconque des revendications 1 à 6, caractérisé en ce que les fibres ou trichites ont un diamètre compris entre 1 et 5 microns et une longueur de 100 à 1000 fois leur diamètre.

0 131 610

15

Fig./.

15                        10
                          11
                          13

16                        14
                          12

Fig.2.

17                        10
        18                13

                          14
12
                          11  Fig.4.

1

FIG.3A.

FIG.3B.

FIG.3C.

FIG.3D.

FIG.3E.

2